# EUROPEAN PATENT SPECIFICATION

(11) **EP 2 888 979 B1**
(45) Date of publication and mention of the grant of the patent: **02.01.2019**
(21) Application number: 14002501.6
(22) Date of filing: 18.07.2014
(51) Int. Cl.: A47J 45/07

(54) **Removable handle for kitchen containers**
Abnehmbarer Griff für Küchenbehälter
Poignée amovible pour récipients de cuisine

(30) Priority: 24.12.2013 ES 201331492
(43) Date of publication of application: 01.07.2015
(73) Proprietor: Isogona, S.L., 43800 Valls (Tarragona) (ES)
(72) Inventor: GAVALDÀ RIUS, Anton, 43800 Valls (Tarragona) (ES)
(74) Representative: Maldonado Jordan, Julia

(56) References cited:
- WO-A1-2010/126219
- DE-C1- 19 506 419
- ES-U- 1 077 413
- GB-A- 993 089
- US-B1- 6 170 694

## Description

### Subject of the invention

This invention refers to a removable handle for kitchen containers, to be applied to containers such as pans, casseroles or similar; comprising: a retaining member to be secured to the container and a handle with a front cavity to receive said retaining member, having a mechanism for blocking and unblocking the retaining member within said cavity.

### State of the art

At present, kitchen containers with a removable handle are widely used as this arrangement provides various advantages such as the reduction of necessary space to store the container in the kitchen with the handle removed, having the possibility to use the same handle for different containers or substitute the handle by a new one in case of deterioration.

Some of the objectives of the manufacturers of this type of removable handles consist in obtaining a stable and secure assembly of the handle in the container, convenience in the holding of the handle and the possibility to conveniently carry out a fast assembly and disassembly of the handle in respect to the container.

The document U201230659 describes a kitchen container having a removable handle, to be applied to containers such as pans, casseroles or similar; of the type comprising: a container and a removable handle, having a cavity and a retaining member for its securement and a displaceable element for blocking and unblocking said retaining member within the cavity.

The above mentioned cavity of the handle has a front opening, two side walls, a bottom wall and a top wall arranged in a back area of a step defining an elevated recess.

The retaining member defined in the container comprises: a thickening in the back portion defining a contact surface with the front opening of the cavity of the handle in the assembly position; an upper surface aimed to contact the top surface of the cavity of the handle and having an upper tooth engaged into the elevated recess of the cavity of the handle in the position of assembly of the handle, and a lower surface which is slanted in respect to the top surface of the retaining member and forming an ascending ramp towards the front end of said retaining member.

The displaceable member for blocking and unblocking the retaining member of the container comprises: - a spring tending to maintain said member in the operative position; - a hand actuator; and - a blocking stop which displaces together with the actuator in the longitudinal direction of the handle between an operative position in which it is located below the ascending ramp of the retaining member of the container preventing its tilting out, releasing the cavity of the handle; and a non operative blocking position arranged out of the vertical projection of the retaining member, permitting its swiveling and extraction from the cavity of the handle.

In this type of containers, the handle has a fix structure, so that any deterioration or damage in the same mean that the handle becomes useless. An additional problem consists in the small relative movements that the handle may carry out in respect of said retaining member due the play in the assembly.

The technical problem addressed by the invention is the development of a removable handle which permits the integration in the area in which the handle is held manually, of some exchangeable parts providing a comfortable holding of the handle, which parts may be substituted in case of deterioration without the need to discard the whole handle, permitting as well its customizing or differentiation; as well as to eliminate eventual relative movements between the handle and the retaining member secured to a kitchen container. Other examples of removable handles for kitchen containers are described in ES1077413, US6170694 and DE19506419.

### Description of the invention

The removable handle for kitchen containers of the invention, corresponds to the above mentioned type comprising a retaining member aimed at its securement to the container and a handle having a frontal cavity for the assembly of said retaining member and a mechanism for blocking and unblocking the retaining member within the cavity, having characteristics aimed at solving the above explained problems.

To this effect, according to the invention the handle has in an intermediate area at least one recess adequate for the assembly of an interchangeable elastic part forming a holding surface for the user; having said recess and interchangeable elastic part respective complementary retaining members and recesses adequate for the securement of said elastic part in the assembly position within the corresponding recess, permitting its later disassembly or substitution.

In one embodiment of the invention, the handle has in said intermediate area two recesses which are symmetrical in respect to the longitudinal middle plane of the handle, affecting each of said recesses a lateral portion, a lower portion and an upper portion of the handle; having said interchangeable elastic parts a "C" shaped cross section of the adequate size to mate with the corresponding recesses.

The protrusions of the interchangeable elastic parts and the complementary protrusions of the recesses of the handle are located in opposed ends of the same; ensuring its secure lodging in the assembled position and that the opposed ends of the elastic parts be secured to the handle and flush with the external surface of the same.

In one embodiment of the invention, said interchangeable elastic parts are formed in a coloured plastic material, permitting the differentiation or customization of the handle.

With the aim to reduce the mobility between the handle and the retaining member of the container in the assembled position, said retaining member comprises: an horizontal upper surface, a lower surface ascending towards its front end and having in the upper middle area a recess with the shape of rectangular triangle adequate to receive a tooth like protrusion, having the same shape, defined on the upper surface of the cavity of the handle.

The mechanism for the automatic blocking and manual unblocking of said retaining member has a manual actuator with a wedge like stop part, which is maintained in an operative position by the action of a spring.

The shape of the rectangular triangular recess defined in the upper part of the retaining member for holding the handle and for the introduction of the same within the tooth like protrusion of the same configuration defined in the upper surface of the cavity of the handle, together with the operation of the wedge like stop part on the lower area of said retaining member eliminates play and small relative movements between the handle and the retaining member, improving the comfort of the operation of the handle.

### Description of the drawings

To complete the present description and with the aim to facilitate the understanding of the features of the invention, a set of drawings is annexed showing, as a non limitative example, the following:
Figure 1 shows a perspective view of an embodiment of the removable handle for kitchen containers according to the invention.
Figure 2 shows an exploded perspective view of the removable handle of figure 1.
Figures 3, 4 and 5 show respective elevation views of the removable handle of the invention respectively before, during and after its assembly with the retaining member aimed at being assembled to a kitchen container.

### Preferred embodiment of the invention

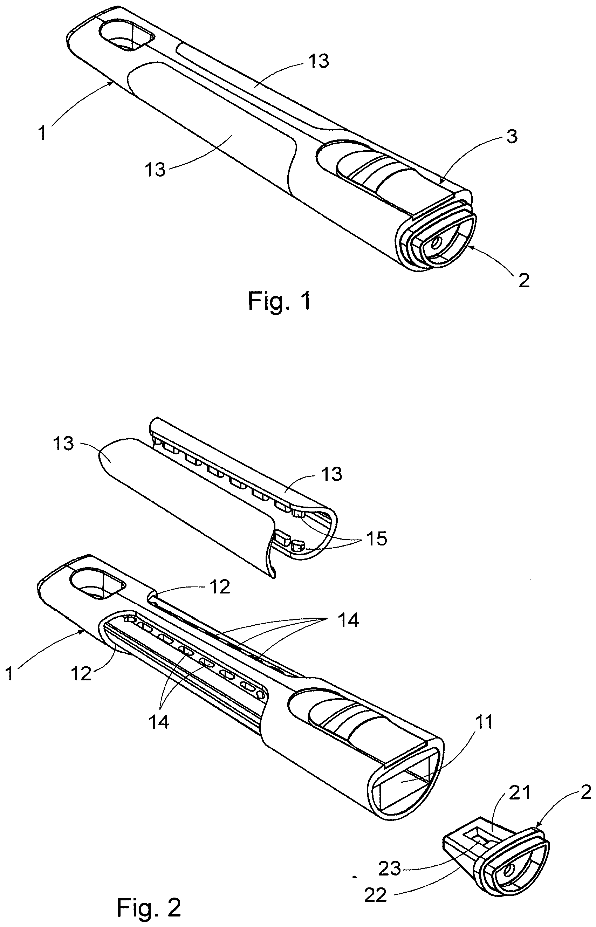

Figure 1 shows a perspective view of a removable handle for kitchen containers, in which the handle (1) has been shown assembled to a retaining member (2) aimed at being secured to the external surfaces of a kitchen container.

As may be observed in figure 2, the handle (1) has a front cavity (11) for the assembly of the retaining member (2) and a mechanism (3) for blocking and unblocking the retaining member (2) within said cavity.

The handle (1) has in its intermediate area two recesses (12) for the assembly of respective interchangeable elastic parts (13).

The recesses (12) are symmetrical in respect of the middle longitudinal plane of the handle (1), each of said recesses extending to a side portion and a lower portion as well as an upper portion of the handle (1). The elastic parts (13) have a complementary configuration in respect to said recesses and a general cross section in the shape of a "C".

Said recesses (12) and said elastic parts (13) have in two opposed ends respective complementary recesses (14) and protrusions (15), which are adequate to permit the assembly and securement of said elastic parts (13) in an assembled position as well as its later disassembly or substitution.

In an embodiment of the invention, said interchangeable elastic parts (13) are formed in a coloured plastic material.

As may be observed from figures 2 to 5, the retaining member (2) has an horizontal upper surface (21) and a lower surface (22), which rises towards its front end. Said retaining member (2) has in its upper part, in its middle area, a recess (23) with the shape of a rectangular triangle in order to receive a tooth-like protrusion (16), having the same profile, defined on the upper surface (17) of the cavity (11) of the handle (1).

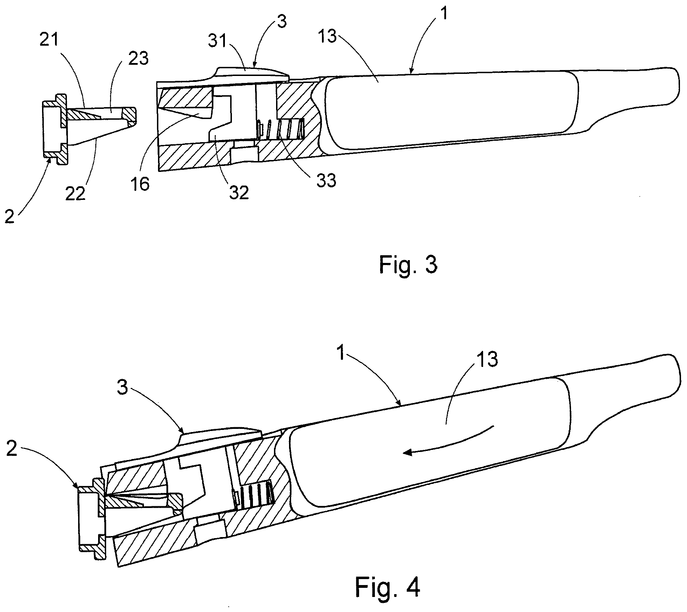

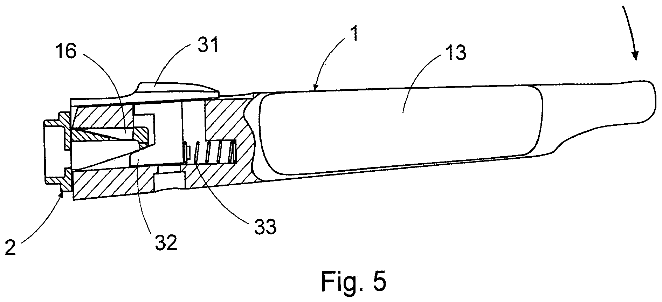

In the cavity (11) of the handle, a mechanism (3) is lodged in order to carry out the automatic blocking and manual unblocking of the retaining member (2), comprising a manual actuator (31) having a wedge like stop portion (32) which tends to be maintained in an operative position, shown in figures 4 and 5, by the action of a spring (33).

As may be observed in figure 4, when the handle (1) is located in a slanted position to introduce the retaining member (2) within the front cavity (11), said retaining member moves the mechanism (3) backwards overcoming the action of spring (31).

Once the retaining member (2) has been introduced within the cavity (11) it is sufficient to swivel down the handle to provoke that the tooth like protrusion (16) be introduced within the recess (23) and that the mechanism (3) be displaced by the action of said spring (33) towards the blocking position shown in figure 5, in which position the stop portion (32) is located under the lower surface (22) of the retaining member (2), blocking the same in the assembled position.

To release the handle (1) it is sufficient to move the manual actuator (31) backwards against the resistance of spring (33), to swivel the handle upwards and to displace the same up to the extraction of the retaining member (2) from the cavity (11).

Upon the invention having been sufficiently described in its nature, including a preferred example of an embodiment of same, it is stated to all effects that the materials, shape, size and arrangement of the described elements may be modified, whenever the modifications do not mean an alteration of the essential characteristics of the invention, as claimed in the following.

## Claims

1. Removable handle for kitchen containers, to be applied to containers such as pans, casseroles or similar; comprising:
- a retaining member (2) to be secured to the container;
- a handle (1) with a front cavity (11) for receiving the retaining member (2) and;
- a mechanism (3) for blocking and unblocking the retaining member (2) within the cavity (11);
**characterized in that**
- the handle (1) has in an intermediate area at least one recess (12) adequate for receiving an interchangeable elastic part (13); said recess (12) and interchangeable elastic part (13) having some recesses (14) and protrusions (15) with a complementary shape, adequate to permit the securement of said elastic part (13) in an assembled position within the corresponding recess (12), as well as its later disassembly or substitution;
- the retaining member (2) has an upper horizontal surface (21), a lower surface (22) rising up towards its front end and having in its upper middle area a recess (23) with a rectangular triangle shape adequate for the lodging of a tooth like protrusion (16), with the same profile, defined on the upper surface (17) of the cavity (11) of the handle (1);
- the mechanism for blocking and unblocking the retaining member (2) within the cavity (11) has a manual actuator (31) which has a wedge like stop portion (32) which is maintained in an operative position by the action of a spring (33).

2. Removable handle, according to claim 1, wherein the handle (1) has in its intermediate area two recesses (12) which are symmetrical in respect to a middle longitudinal plane of the handle (1), affecting each of said recesses (12) a side portion, a lower portion and an upper portion of the handle (1); and having the interchangeable elastic parts (13) a cross section in the shape of a "C" with a size which is adequate to the respective recesses (12).

3. Removable handle, according to claim 2, wherein the protrusions (15) of the interchangeable elastic parts (13) and the recesses (14) complementary to the recesses (12) of the handle are located in so opposed ends of the same.

4. Removable handle, according to claim 1, wherein the interchangeable elastic parts (13) are formed in a coloured plastic material.

## Patentansprüche

1. Abnehmbarer Griff für Küchenbehälter, der auf Behälter wie Pfannen, Kasserollen oder dergleichen aufzubringen ist; umfassend:
- ein Rückhalteelement (2), das an dem Behälter zu befestigen ist;
- einen Griff (1) mit einem vorderen Hohlraum (11) zur Aufnahme des Rückhalteelements (2) und;
- einen Mechanismus (3) zum Ver- und Entriegeln des Rückhalteelements (2) innerhalb des Hohlraums (11);
**dadurch gekennzeichnet, dass**
- der Griff (1) in einem Zwischenbereich mindestens eine Aussparung (12) aufweist, die zur Aufnahme eines austauschbaren elastischen Teils (13) geeignet ist; wobei die Aussparung (12) und das austauschbare elastische Teil (13) einige Aussparungen (14) und Vorsprünge (15) mit einer komplementären Form aufweisen, die geeignet sind, um die Befestigung des elastischen Teils (13) in einer montierten Position innerhalb der entsprechenden Aussparung (12) sowie seine spätere Demontage oder Ersetzung zu ermöglichen;
- das Rückhalteelement (2) eine obere horizontale Fläche (21) aufweist, wobei eine untere Fläche (22) zu ihrem vorderen Ende hin ansteigt und in ihrem oberen mittleren Bereich eine Aussparung (23) mit einer rechteckigen Dreiecksform aufweist, die für die Aufnahme eines zahnförmigen Vorsprungs (16) mit dem gleichen Profil geeignet ist, der auf der Oberseite (17) des Hohlraums (11) des Griffs (1) definiert ist;
- der Mechanismus zum Ver- und Entriegeln des Rückhalteelements (2) innerhalb des Hohlraums (11) ein manuelles Stellglied (31) aufweist, das einen keilförmigen Anschlagabschnitt (32) aufweist, der durch die Wirkung einer Feder (33) in einer Betriebsstellung gehalten wird.

2. Abnehmbarer Griff nach Anspruch 1, wobei der Griff (1) in seinem Zwischenbereich zwei Aussparungen (12) aufweist, die symmetrisch zu einer mittleren Längsebene des Griffs (1) sind, wobei jede der Aussparungen (12) einen Seitenabschnitt, einen unteren Abschnitt und einen oberen Abschnitt des Griffs (1) betreffen; und wobei die austauschbaren elastischen Teile (13) einen Querschnitt in Form eines "C" aufweisen, mit einer Größe, die zu den jeweiligen Aussparungen (12) passt.

3. Abnehmbarer Griff nach Anspruch 2, wobei die Vorsprünge (15) der austauschbaren elastischen Teile (13) und die zu den Aussparungen (12) des Griffs komplementären Aussparungen (14) an so gegenüberliegenden Enden desselben angeordnet sind.

4. Abnehmbarer Griff nach Anspruch 1, wobei die austauschbaren elastischen Teile (13) in einem farbigen Kunststoffmaterial ausgebildet sind.

## Revendications

1. Poignée amovible pour récipients de cuisine, à appliquer sur des récipients tels que des poêles, des casseroles ou similaires ; comprenant:
- un élément de retenue (2) à fixer au récipient ;
- une poignée (1) avec une cavité avant (11) pour recevoir l'élément de retenue (2) et ;
- un mécanisme (3) pour bloquer et débloquer l'élément de retenue (2) à l'intérieur de la cavité (11) ;
**caractérisé en ce que**
- la poignée (1) présente dans une zone intermédiaire, au moins, un évidement (12) adéquat pour
recevoir une partie élastique interchangeable (13) ; ledit évidement (12) et la partie élastique interchangeable (13) présentant des évidements (14) et des saillies (15) de forme complémentaire, adéquats pour permettre la fixation de ladite partie élastique (13) dans une position assemblée dans l'évidement correspondant (12), ainsi que son désassemblage ou substitution ultérieure ;
- l'élément de retenue (2) présente une surface horizontale supérieure (21), une surface inférieure (22) s'élevant vers son extrémité avant et présentant dans sa zone médiane supérieure un évidement (23), en forme de triangle rectangle adéquat pour le logement de une saillie en forme de dent (16), ayant le même profil, définie sur la surface supérieure (17) de la cavité (11) de la poignée (1) ;
- le mécanisme de blocage et de déblocage de l'élément de retenue (2) à l'intérieur de la cavité (11) comporte un actionneur manuel (31) qui inclut une partie de butée en forme de biseau (32) qui est maintenue dans une position de travail par l'action d'un ressort (33).

2. Poignée amovible, selon la revendication 1, dans laquelle la poignée (1) présente dans sa zone intermédiaire deux évidements (12) symétriques par rapport à un plan longitudinal médian de la poignée (1), affectant chacun des dits évidements (12), une partie latérale, une partie inférieure et une partie supérieure de la poignée (1) ; et ayant les parties élastiques interchangeables (13), une section transversale en forme de « C » avec une taille adaptée aux évidements respectifs (12).

3. Poignée amovible, selon la revendication 2, dans laquelle les saillies (15) des parties élastiques interchangeables (13) et les évidements (14) complémentaires des évidements (12) de la poignée sont situés dans des extrémités opposées de celle-ci.

4. Poignée amovible, selon la revendication 1, dans laquelle les parties élastiques interchangeables (13) sont formées dans un matériau plastique coloré.
